Europäisches Patentamt

European Patent Office

Office européen des brevets

(11) Veröffentlichungsnummer: **0 340 577 B1**

## (12) EUROPÄISCHE PATENTSCHRIFT

(45) Veröffentlichungstag der Patentschrift: **29.09.93**

(21) Anmeldenummer: **89107318.1**

(22) Anmeldetag: **22.04.89**

(51) Int. Cl.⁵: **G01N 21/41**, G01N 21/45

(54) **Verfahren und Vorrichtung zur Bestimmung der Brechzahl n einer Substanz.**

(30) Priorität: **02.05.88 DE 3814844**

(43) Veröffentlichungstag der Anmeldung:
**08.11.89 Patentblatt 89/45**

(45) Bekanntmachung des Hinweises auf die
Patenterteilung:
**29.09.93 Patentblatt 93/39**

(84) Benannte Vertragsstaaten:
**DE FR GB IT NL SE**

(56) Entgegenhaltungen:
**DE-A- 3 723 159**

**ADVANCES IN INSTRUMENTATION, Band 41,
Nr. 3, 1986, Seiten 1177-1184, Research Triangle; E.W. SAASKI et al.: "A fiber optic
sensing system based on spectral modulation"**

**PATENT ABSTRACTS OF JAPAN, Band 11,
Nr. 276 (P-613)[2723], 8. September 1987;&
JP-A-62 75 231**

(73) Patentinhaber: **IOT ENTWICKLUNGSGESELL-
SCHAFT FÜR INTEGRIERTE OPTIK-
TECHNOLOGIE MBH
Bruchsaler Strasse 22
D-68753 Waghäusel(DE)**

(72) Erfinder: **Fabricius, Norbert, Dr.Dipl.-Phys.
Tuchmacherweg 5
D-6917 Schönau(DE)**
Erfinder: **Ross, Ludwig, Dr.Dipl.-Chem.
Veldenzer Weg 11
D-6509 Armsheim(DE)**
Erfinder: **Baumgart, Jörg
Heidelbergerstrasse 1
D-6833 Waghäusel(DE)**
Erfinder: **Oeste, Helmut, Dipl.-Ing.
Im Odemsloh 117
D-4600 Dortmund 15(DE)**
Erfinder: **Guttmann, H.-J., Dipl.-Ing.
Hess-Strasse 2
D-6200 Wiesbaden(DE)**
Erfinder: **Efstathiou, Charitos, Dipl.-Ing.
Engelhardstrasse 15a
D-6090 Rüsselsheim(DE)**
Erfinder: **Götz, Helga,
Wilhelmstrasse 33
D-6530 Bingen-Buedesh(DE)**

LASER FOCUS, Band 21, Nr. 10, Oktober 1985, Seiten 142-143,144,146, Littleton, MA, US; J.D. JONES et al.: "Research advances in fiberoptic interferometric and polarimetric sensors"

Erfinder: **Kluge, Jürgen**
**Konrad-Adenauer 23A**
**D-6915 Dossenheim(DE)**

(74) Vertreter: **Fey, Hans-Jürgen**
**Carl Zeiss, Patentabteilung**
**D-73446 Oberkochen (DE)**

**Beschreibung**

Die vorliegende Erfindung betrifft ein Verfahren zur Bestimmung der Brechzahl n einer Substanz sowie eine Vorrichtung zur Ausübung dieses Verfahrens.

Optische Instrumente zur Bestimmung der Brechzahl n einer Substanz sind unter der Bezeichnung Refraktometer seit langem bekannt. In diesen klassisch-optischen Geräten erfolgt die Bestimmung der Brechzahl vorzugsweise durch Messung des Grenzwinkels der Totalreflexion unter Verwendung eines Meßprismas mit bekannter Brechzahl.

Bekannt sind auch sogenannte Interferenz-Refraktometer, bei denen die Brechzahlbestimmung auf interferometrischem Wege erfolgt. Die Erfassung der Meßwerte erfolgt bei den bekannten Geräten visuell oder auch über eine aufwendige Elektronik.

Alle diese bekannten Geräte bestehen aus hochwertigen optischen Einzelelementen und haben einen großen Platzbedarf. Sowohl die erforderliche höchste Präzision bei der Herstellung der optischen und feinmechanischen Komponenten, als auch die elektronische Auswertung in automatischen Geräten bedingen einen hohen Gerätepreis.

Daraus resultierend ist in der Fachwelt der Wunsch nach wesentlich kleineren, einfacher handhabbaren und preiswerteren Geraten entstanden.

Einen interessanten und vielversprechenden Weg zur Miniaturisierung optischer Instrumente hat schon 1969 Stewart E. Miller (The Bell System Technical Journal Vol. 48, 1969, No. 7, S. 2059/2069) aufgezeigt. Die von ihm gemachten Vorschläge zu Aufbau und Einsatz integriert-optischer Bauelemente waren jedoch aus technologischen Gründen nicht realisierbar.

Erst mit der intensiven technologischen Entwicklung auf dem Materialgebiet und der Maskentechnologie konnten bei der Realisierung von integriert-optischen Bauelementen in den letzten Jahren wesentliche Fortschritte erzielt werden. Es wurden geeignete Substratmaterialien aus Glas, kristallinen Substanzen oder transparenten Kunststoffen entwickelt, in die durch Ionendiffusion, Ionenimplantation oder durch Aufbringen von organischen oder metall-organischen Schichten Wellenleiter geeigneter Ausbildung integriert werden können.

In der Folge sind dann integriert-optische Bauelemente entstanden, die in Übertragungssystemen Aufgaben wie Modulation, Schalten und Verbinden zwischen Kanälen, Verzweigen, usw. übernehmen. Auch Geräte zum Messen physikalischer Größen, bei denen als Sensor intergriert-optische Bauelemente Verwendung finden, sind bekanntgeworden.

So ist z.B. in der Zeitschrift "SCHOTT - Information" Nr. 3/1987 auf S. 29 in Bild 3 ein integriert-optischer Wasserstoff-Sensor gezeigt. In der DD-PS 249.772 ist ein integriert-optischer Temperatursensor beschrieben, der als Interferometerstruktur ausgebildet ist, in der temperaturabhängige Änderungen der Phasendifferenz zwischen dem durch die beiden Interferometerarme laufenden Licht zur Temperaturmessung verwendet werden.

Es ist nun die Aufgabe der vorliegenden Erfindung ein Verfahren zur Bestimmung der Brechzahl n einer Substanz anzugeben, das in besonders einfacher Weise hochgenaue Ergebnisse liefert und das zu seiner Ausübung nur eines kleinen, preiswerten und einfach handhabbaren Gerätes bedarf.

Diese Aufgabe wird erfindungsgemäß durch das Verfahren gelöst, dessen Schritte im kennzeichnenden Teil des Anspruchs 1 aufgeführt sind. Das Verfahren geht dabei von der Erkenntnis aus, daß die durch den Wellenleiter laufende Welle im Meßabschnitt, d.h. in dem Abschnitt in dem sich der Wellenleiter in optischem Kontakt mit der zu messenden Substanz befindet teilweise auch in dieser Substanz verläuft und daß dadurch die Ausbreitungsgeschwindigkeit und damit auch die effektive Brechzahl im Wellenleiter geändert wird.

Diese Änderung der effektiven Brechzahl führt zu einer Phasenänderung des durch den Wellenleiter laufenden Lichtes, die gemäß Anspruch 2 als Differenz zur Phase eines nichtbeeinflußten Lichtanteils gemessen wird. Diese Messung erfolgt vorzugsweise interferometrisch.

Die Änderung der effektiven Brechzahl im Wellenleiter führt auch dazu, daß die Polarisationsrichtung eines durch den Meß-Abschnitt laufenden polarisierten Lichtes geändert wird und zwar in Abhängigkeit von der Brechzahl der zu messenden Substanz. Zur Messung kann beispielsweise ein Signal verwendet werden das die Änderung der Polarisationsrichtung wieder rückgängig macht.

In den Ansprüchen 5 - 12 sind Vorrichtungen zur Durchführung der Verfahren nach den Ansprüchen 1 - 4 beschrieben.

Die Erfindung wird im folgendem anhand der in den beigefügten Figuren 1 - 5 dargestellten Zeichnungen näher erläutert. Dabei zeigen:

Fig. 1    ein Ausführungsbeispiel einer Vorrichtung nach der Erfindung, bei dem die Bestimmung der Brechzahl n einer Substanz auf interferometrischem Wege erfolgt;

Fig. 2 eine perspektivische Darstellung des in Fig. 1 als Sensor dienenden integriert-optischen Bauelements;

Fig. 3 das Brechzahlprofil des durch thermischen Ionenaustausch erzeugten Wellenleiters des integriert-optischen Bauelementes der Fig. 2;

Fig. 4 eine Kalibrierkurve anhand der in der Vorrichtung nach Fig. 1 die Brechzahl der Substanz ermittelt wird;

Fig. 5 ein anderes Ausführungsbeispiel einer Vorrichtung zur Bestimmung der Brechzahl n, bei dem diese Bestimmung durch Messung der Änderung der Polarisationrichtung des Lichtes erfolgt.

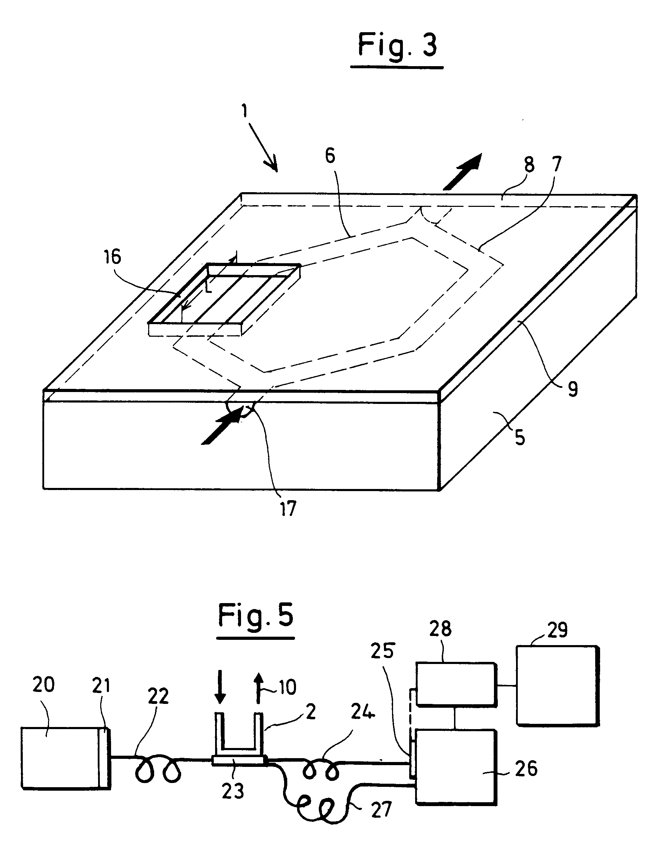

In den Ausführungsbeispielen der Figuren ist als Substrat Glas verwendet, das unter der Bezeichnung BGG 21 von der Firma SCHOTT hergestellt wird und dessen Eigenschaften auf Seite 27 des schon genannten Artikels aus der Zeitschrift "SCHOTT-Information" 3/1987 beschrieben sind. In dieses Substrat sind streifenförmige Wellenleiter integriert. Zu deren Herstellung wird auf dem Substrat nach der bekannten Planartechnologie eine Maske erzeugt, die nur den Wellenleiterbereich freiläßt. Das so vorbereitete Substrat wird über eine Zeit von mehreren Stunden in eine ca. 410° heiße Salzlösung aus $CsNO_3/CsCl$ eingebracht. Dabei findet ein thermischer Ionenaustausch statt, bei dem $Cs^+$ - Ionen in das Substrat hinein und $K^+$ - Ionen aus dem Substrat herauswandern. Auf diese Weise wird in dem Substrat mit der Brechzahl $n_S$ ein Wellenleiter erzeugt, dessen senkrecht zur Oberfläche gemessenes Brechzahlprofil beispielsweise die in Fig. 3 dargestellte Gestalt hat. Aus dieser Kurve erkennt man, daß die Brechzahl an der Oberfläche den Wert $n_s + \Delta n$ hat und daß dieser Wert bis zur gegenüberliegenden Grenzfläche des Wellenleiters, die durch die Diffusionstiefe gegeben ist, wieder auf den Wert $n_s$ abnimmt. Für die im Wellenleiter laufende Mode des Lichtes mit der Wellenlänge $\lambda_0$ hat dieser Wellenleiter eine bestimmte, der Lichtwelle zugeordnete Brechzahl $n_{eff}$. Für diese gilt $n_s < n_{eff} < n_s + \Delta n$.

Der Ionenaustausch wird so geführt, daß Monomode-Wellenleiter entstehen. Ein solcher Wellenleiter hat im Wellenlängenbereich von 400 - 1600 nm eine Grunddämpfung < 0,1 dB/cm; die Diffusionstiefe bei einem solchen Wellenleiter liegt im Bereich von etwa 1,5 $\mu$m bis 10 $\mu$m.

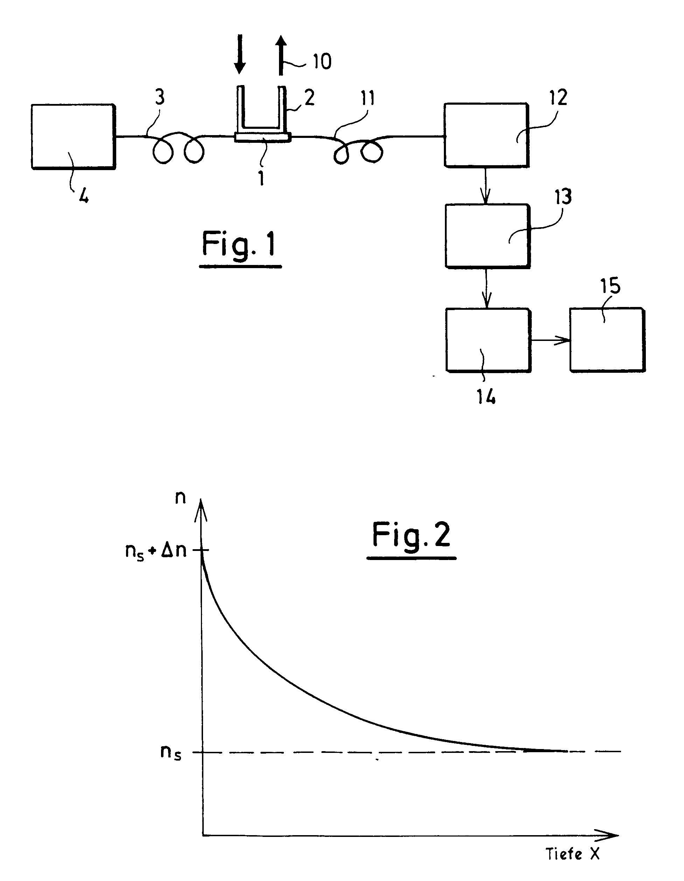

Im Ausführungsbeispiel der Fig. 1 ist mit (1) ein integriert-optisches Bauelement bezeichnet, dessen Aufbau und Wirkung im Zusammenhang mit Fig. 2 näher erläutert wird. Auf der Lichteintrittsseite ist an das Bauelement (1) eine monomodige Lichtleitfaser (3) angeklebt, die das von einer monochromatischen Lichtquelle (4) ausgehende Licht zum Bauelement (1) leitet. Als Lichtquelle findet ein Laser Verwendung, der im dargestellten Ausführungsbeispiel bei einer Wellenlänge $\lambda_0$ = 633 nm arbeitet.

Auf das integriert-optische Bauelement (1) ist eine Durchflußküvette (2) aufgesetzt, durch welche die zu messende Substanz (10) fließt. Diese Substanz ist, wie im folgenden gezeigt wird teilweise in optischem Kontakt mit dem oder den Wellenleitern des Bauelementes (1) und bewirkt dabei eine Phasenänderung des über die Faser (3) eingekoppelten Lichtes. An der Lichtaustrittseite des integriert-optischen Bauelementes (1) ist eine weitere monomodige Lichtleitfaser (11) angeklebt, die das von der Meßsubstanz beeinflußte Licht einem Empfänger (12) zuleitet. Im einfachsten Fall wird die durch die Meßsubstanz (10) bewirkte Phasenänderung des Lichts durch eine Messung der Intensitätsänderung ermittelt, die eintritt, sobald die Meßsubstanz (10) in optischem Kontakt zum Wellenleiter des Bauelementes (1) gebracht wird.

Im Beispiel der Fig. 1 ist mit dem Detektor (12) eine Zähllogik (3) verbunden, welche beispielsweise die Interferenzmaxima im Signal zählt. Durch Vergleich mit einer im Element 14 abgelegten Kalibrierungskurve wird die von der Zähllogik 13 detektierte Phasenänderung des Lichtes in den n-Wert der Brechzahl umgerechnet und im Display 15 zur Anzeige gebracht.

Fig. 2 zeigt eine perspektivische Darstellung des in Fig. 1 mit (1) bezeichneten integriert-optischen Bauelementes. Mit dem Substrat (5) ist ein Wellenleiter integriert, dem auf seiner Lichteintrittsseite (17) über die angeklebte Monomode-Lichtleitfaser (3) Licht von der Lichtquelle (4) zugeführt wird. Die Wellenlänge dieses Lichtes ist so gewählt, daß die verwendeten Lichtleitfasern und Wellenleiter monomodig sind.

Der mit dem Substrat (5) integrierte Wellenleiter hat die Form einer Mach-Zehnder-Interferometerstruktur. Er verzweigt sich in die beiden Arme (6) und (7), die auf der Lichtaustrittsseite wieder vereinigt sind. Auf das Substrat (5) ist eine Abdeckschicht (9) aufgebracht, die aus einem Material besteht, dessen Brechungsindex gleich oder kleiner ist als der des Substrats (5). Diese Schicht kann beispielsweise aus Polyvinylidenfluorid mit n = 1,42 bestehen. Die Abdeckschicht (9) bedeckt den Arm (6) des Wellenleiters über einen Bereich (16) der Länge L nicht. Die zu messende Substanz (10), beispielsweise eine Flüssigkeit wird mittels der Durchflußzelle (2) auf die Schicht (9) aufgebracht und kommt dabei über den Bereich (16) in optischen Kontakt mit dem Wellenleiter im Meßarm (6). Die über die Faser (3) zugeführte Lichtwelle verläuft teilweise auch in der Meßsubstanz (10). Dadurch wird die Ausbreitungsgeschwindigkeit des Lichts im Arm (6) und damit auch die Phase dieses Lichts beeinflußt. Die Phase des über den Referenzarm (7) laufenden Lichtes wird praktisch nicht beeinflußt, da der Brechungsindex der Schicht $\leq$ dem Brechungsindex des Substrats (5) ist. Die beiden über die Arme (6) und (7) geleiteten Lichtanteile interferieren nach ihrer Vereinigung auf der Lichtaustrittsseite (8).

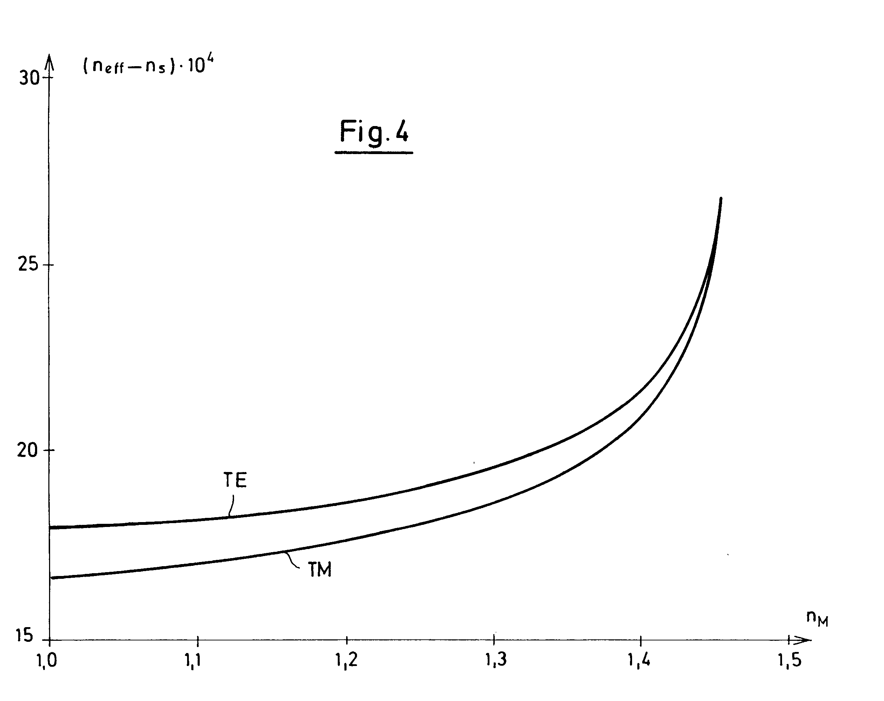

Der optische Kontakt des Meßarms (6) mit der Meßsubstanz (10) verändert die effektive Brechzahl $n_{eff}$ des Wellenleiters über den Bereich L. Der Zusammenhang zwischen der Brechzahl $n_M$ des zu messenden Mediums und der effektiven Brechzahl des Wellenleiters ist in Fig. 4 für die beiden senkrecht zueinander polarisierten TM - und TE-Moden dargestellt. In dieser Darstellung zeigt die Ordinate den Wert ( $n_{eff}$ - $n_s$ ) • $10^4$. Die Kurven der Fig. 4 lassen sich entweder errechnen oder durch Messung bestimmen. Sie sind als Eich- oder Kalibrierungskurven im Element (14) abgelegt.

Man erkennt aus den Kurven der Fig. 4 daß sich ein eindeutiger Zusammenhang zwischen dem effektiven Brechwert $n_{eff}$ des Lichtleiters und dem Brechwert $n_M$ der Meßsubstanz ergibt. Im gezeigten Beispiel liegt der gut ausnutzbare Meßbereich bei $n_M$ Werten von etwa 1,2 - 1,46.

Die Änderung der effektiven Brechzahl $n_{eff}$ im Bereich des Meßarms (6) führt zu einer Phasenverschiebung der durch diesen Arm laufenden Lichtquelle, die proportional zur Kontaktlänge L ist. Vergleicht man die Phase der Lichtquelle im Meßarm (6) mit der Phase im Referenzarm (7) so ist die ermittelte Phasendifferenz $\Delta \phi$ ein Maß für die gesuchte Brechzahl $n_M$ nach der Formel

$$\Delta \varphi = \frac{2 \pi L}{\lambda_0} \cdot \Delta n_{eff} \, (n_M)$$

$\Delta n_{eff}$ ist dabei die Differenz der effektiven Brechzahlen in den beiden Armen (6) und (7) des integriert-optischen Bauelementes (1).

Die Phasendifferenz $\Delta \phi$ führt im Ausführungsbeispiel der Figuren 1 und 2 zur Interferenz der über die Arme (6) und (7) laufenden Lichtwellen. Das Interferenzsignal wird über die Lichtleitfaser (11) dem Detektor (12) zugeführt und wird über die elektronischen Bauelemente (13) und (14) in ein $n_M$-Signal umgerechnet, das im Display (15) zur Anzeige kommt.

Im Ausführungsbeispiel der Fig. 2 beträgt die Länge L des Kontaktbereiches 1 cm. Der seitliche Abstand zwischen den beiden Armen (6) und (7) des integriert-optischen Bauelementes (1) liegt in der Größenordnung von 1 mm. Dies hat den Vorteil, daß sich örtliche Temperatureffekte ausmitteln und das Element (1) nur eine vernachlässigbar kleine Querempfindlichkeit aufweist.

Der integriert-optische Brechzahlsensor entsprechend Fig. 1 kann vorteilhaft in der Zuckerindustrie zur Messung der Zuckerkonzentration Verwendung finden. Eine besonders vorteilhafte Anwendung ergibt sich in der Petrochemie, da der Brechzahlsensor keine Probleme beim Explosionsschutz verursacht.

Im Zusammenhang mit den Ausführungsbeispielen wurde als Substratmaterial Glas beschrieben. Es sind aber auch, je nach Einsatzbereich andere Substratmaterialen denkbar, wie kristalline Substanzen, z.B. $LiNbO_3$, $LiTaO_3$, GaAs, InP und/oder Mischverbindungen daraus. Auch transparente Kunststoffe sind als Substratmaterial verwendbar. Alle Substratmaterialien müssen die Erzeugung wellenleitender Strukturen nach den bekannten Verfahren ermöglichen, welche bei der Arbeitswellenlänge eine geringe Dämpfung aufweisen. Die Auswahl des geeigneten Substratmaterials erfolgt neben anderen Gesichtspunkten auch nach der Forderung, daß die Brechzahl $n_s$ nur wenig über dem jeweiligen Brechzahl-Meßbereich des Sensors liegen soll.

In der organischen Chemie liegen die Brechzahlen $n_M$ der zu messenden Substanzen bei etwa 1,2 bis 1,5. Auch für diesen Meßbereich lassen sich unter den obengenannten Beispielen geeignete Substratmaterialien finden.

Unabhängig vom verwendeten Material bleibt das Meßverfahren und die Meßvorrichtung unverändert.

Im Ausführungsbeispiel der Figuren 1 und 2 ist das integriert-optische Bauelement (1) in Form eines Interferometers ausgebildet. Es sind auch andere Ausführungsformen denkbar, welche die Messung der Phasendifferenz $\Delta \phi$ ermöglichen.

Ein weiteres Ausführungsbeispiel, das nach einem anderen Prinzip arbeitet ist in Fig. 5 dargestellt. Hier wird die Änderung der Polarisationsrichtung einer Lichtquelle zur Messung ausgenutzt. Das von einer monochromatischen Lichtquelle (20) erzeugte Licht durchläuft einen Polarisator (21) und wird über die Lichtleitfaser (22) einem integriert-optischen Bauelement (23) zugeführt. Dieses Element enthält auf der Lichteintrittsseite einen in zwei gerade, parallel verlaufende Arme verzweigten Lichtleiter. Einer dieser Arme ist wie in Fig. 2 so ausgebildet, daß die Meßsubstanz (10) über eine Länge L in direkten optischen Kontakt mit dem Wellenleiter kommt. Dabei wird die Polarisationsebene der Lichtquelle gedreht. Das durch diesen Arm laufende Licht wird von einer Lichtleitfaser (24) über einen Analysator (25) einem Detektor (26) zugeführt. Das im anderen Arm des Bauelementes (23) nicht beeinflußte Licht gelangt über eine Lichtleiter

EP 0 340 577 B1

(27) ebenfalls zum Detektor (26). Dieser stellt die Drehung der Polarisationsebene fest und erzeugt über das Element (28) ein Signal, das den Analysator (25) solange verdreht bis die Drehung der Polarisationsebene exakt kompensiert ist. Dieses Signal wird im Display (29) zur Anzeige gebracht.

**Patentansprüche**

1. Verfahren zur Bestimmung der Brechzahl n einer Substanz, wobei monochromatisches Licht einem in ein Substrat integrierten optischen Monomode-Wellenleiter zugeführt wird, dieser Wellenleiter über einen Meßabschnitt vorbestimmter Länge mit der zu messenden Substanz in optischen Kontakt gebracht wird und die Brechzahl n über die Änderung der effektiven Brechzahl im Meßabschnitt des Wellenleiters ermittelt wird.

2. Verfahren nach Anspruch 1, dadurch gekennzeichnet, daß zur Messung die Phasendifferenz zwischen einem im Meßabschnitt beeinflußten Lichtanteil und einem nichtbeeinflußten Lichtanteil benutzt wird.

3. Verfahren nach Anspruch 2, dadurch gekennzeichnet, daß die Messung interferometrisch erfolgt.

4. Verfahren nach Anspruch 1, dadurch gekennzeichnet, daß zur Messung die Änderung der Polarisationsrichtung benutzt wird, die das von der Lichtquelle kommende polarisierte Licht im Meßabschnitt erfährt.

5. Vorrichtung zur Durchführung des Verfahrens nach Anspruch 1, enthaltend eine monochromatische Lichtquelle (4), einen in ein Substrat (5) integrierten optischen Monomode-Wellenleiter (6,7), der über einen Abschnitt (16) vorbestimmter Länge L in optischem Kontakt mit der zu messenden Substanz (10) steht, und eine Detektoranordnung (12 - 15), die das von der Lichtquelle (4) durch den Wellenleiter (6,7) tretende Licht in ein der Brechzahl $n_M$ der zu messenden Substanz proportionales Signal umwandelt.

6. Vorrichtung nach Anspruch 5 zur Durchführung des Verfahrens nach Anspruch 1 und 2, dadurch gekennzeichnet, daß in das Substrat (5) zwei streifenförmige, parallel verlaufende optische Monomode-Wellenleiter (6,7) integriert sind, von denen nur einer (6) mit der zu messenden Substanz (10) in optischem Kontakt steht, und daß das von der Lichtquelle (4) kommende Licht zu gleichen Teilen durch die beiden Wellenleiter (6,7) geleitet ist.

7. Vorrichtung nach Anspruch 5 zur Durchführung des Verfahrens nach Anspruch 1 - 3, dadurch gekennzeichnet, daß in das Substrat (5) ein Wellenleiter integriert ist, der sich auf der Lichteintrittsseite (17) in zwei Arme (6,7) aufspaltet, die sich vor der Lichtaustrittsseite (8) wieder vereinigen und daß einer der Arme (6) über einen Meßabschnitt (16) von bestimmter Länge L mit der zu messenden Substanz (10) in optischem Kontakt steht.

8. Vorrichtung nach Anspruch 7, dadurch gekennzeichnet, daß das Substrat (5) mit Ausnahme des Meßabschnitts (16) mit einer Abdeckschicht (9) versehen ist, deren Brechzahl kleiner oder gleich der des Substrats ist.

9. Vorrichtung nach Anspruch 8, dadurch gekennzeichnet, daß die Abdeckschicht aus Polyvinylidenfluorid besteht.

10. Vorrichtung nach Anspruch 5 zur Durchführung des Verfahrens nach Anspruch 4, dadurch gekennzeichnet, daß die Lichtquelle (20, 21) polarisiertes Licht erzeugt und daß die Detektoranordnung (26) zur Messung der Änderung der Polarisationsrichtung dieses Lichtes durch den optischen Kontakt des Wellenleiters mit der zu messenden Substanz (10) ausgebildet ist.

11. Vorrichtung nach Anspruch 10, dadurch gekennzeichnet, daß die Messung durch Kompensation der Änderung der Polarisationsrichtung erfolgt.

**Claims**

1. Method of determining the index of refraction (n) of a substance comprising the steps of conducting monochromatic light to an optical single-mode wave guide integrated into a substrate, bringing this

6

wave guide with a measurement segment of predetermined length into optical contact with the substance to be measured, and determining the refractive index (n) from the change in the effective refractive index of the wave guide along the segment.

2. Method according to claim 1 characterised by using the phase difference between a light flux influenced in the measurement segment and an undisturbed light flux.

3. Method according to claim 2, characterised in that the measurement of said index of refraction (n) is performed interferometrically.

4. Method according to claim 1, characterised in that the change of the direction of polarisation effected to the light from the light source in the measurement segment is used for measurement.

5. Apparatus for executing the method of claim 1, featuring a monochromatic light source (4), an optical single mode wave guide (6, 7) integrated into a substrate (5), being in optical contact with the substance (10) to be measured along a segment of predetermined length (L), and a detector arrangement (12-15) converting the light of the light source (4) passing the wave guide (6, 7) into a signal proportional to the index of refraction ($n_m$) of the substance to be measured.

6. Apparatus according to claim 5 for executing the method of claim 1 and 2 characterised in that two strip-shaped parallel optical single-mode wave guides (6, 7) are integrated into the substrate (5), only one of these (6) being in optical contact with the substance (10) to be measured, and that the light of the light source (4) is evenly distributed into the two wave guides (6, 7).

7. Apparatus according to claim 5 for executing the method of claim 1-3 characterised in that a wave guide is integrated into the substrate (5), which is divided into two arms (6, 7) at the light entrance (17), which arms rejoin at the light exit end (8), and that one arm (6) is in optical contact with the substance (10) to be measured along a measuring segment (16) of predetermined length (L).

8. Apparatus according to claim 7 characterised in that, with the exception of the measuring segment (16), the substrate (5) is clad by a cover layer (9) with a refractive index equal to or less than that of the substrate.

9. Apparatus according to claim 8, characterised in that the cover layer is made of polyvinylidene fluoride.

10. Apparatus according to claim 5 for executing the method of claim 4 characterised in that the light source (20, 21) produces polarized light and that the detector arrangement (26) is adapted for the measurement of the change of the direction of polarization of this light by the optical contact of the wave guide with the substance (10) to be measured.

11. Apparatus according to claim 10 characterised in that the measurement is made by compensation of the change of direction of polarization.

**Revendications**

1. Procédé pour déterminer l'indice de réfraction n d'une substance, selon lequel on envoie une lumière monochromatique à un guide d'ondes optiques monomode intégré dans un substrat, on place ce guide d'ondes en contact optique, sur une section de mesure de longueur prédéterminée, avec la substance mesurée et on détermine l'indice de réfraction n au moyen de la variation de l'indice de réfraction effectif dans la section de mesure du guide d'ondes.

2. Procédé selon la revendication 1, caractérisé en ce que pour la mesure, on utilise la différence de phase entre une composante de la lumière, influencée dans la section de mesure, et une composante de lumière non influencée.

3. Procédé selon la revendication 2, caractérisé en ce que la mesure s'effectue par voie interférométrique.

**4.** Procédé selon la revendication 1, caractérisé en ce que pour la mesure, on utilise la variation de la direction de polarisation que la lumière polarisée, qui est délivrée par la source de lumière, subit dans la section de mesure.

**5.** Dispositif pour la mise en oeuvre du procédé selon la revendication 1, contenant une source de lumière monochromatique (4), un guide d'ondes optiques monomode (6,7), intégré dans un substrat 5 et qui est placé en contact optique, sur une section (16) de longueur prédéterminée L, avec la substance à mesurer (10), et un dispositif de détection (12-15), qui convertit la lumière, qui est délivrée par la source de lumière (4) et traverse le guide d'ondes (6,7), en un signal proportionnel à l'indice de réfraction $n_M$ de la substance à mesurer.

**6.** Dispositif selon la revendication 5 pour la mise en oeuvre du procédé selon les revendications 1 et 2, caractérisé en ce que dans le substrat (5) sont intégrés deux guides d'ondes optiques monomodes (6,7) parallèles et en forme de bandes, dont l'un seulement (6) est en contact optique avec la substance à mesurer (10), et que la lumière arrivant de la source de lumière (4) est dirigée, en des parties égales, dans les deux guides d'ondes (6,7).

**7.** Dispositif selon la revendication 5 pour la mise en oeuvre du procédé selon la revendication 1-3, caractérisé en ce que dans le substrat (5) est intégré un guide d'ondes, qui subdivise le côté (17) d'entrée de la lumière en deux bras (6,7), qui se réunissent à nouveau en amont du côté (8) de sortie de la lumière, et que l'un des bras (6) est en contact optique, par l'intermédiaire d'une section de mesure (16) de longueur déterminée L, avec la substance à mesurer (10).

**8.** Dispositif selon la revendication 7, caractérisé en ce que le substrat (5) comporte, à l'exception de la section de mesure (16), une couche de revêtement (9), dont l'indice de réfraction est inférieur ou égal à celui du substrat.

**9.** Dispositif selon la revendication 8, caractérisé en ce que la couche de revêtement est constituée par du fluorure de polyvinylidène.

**10.** Dispositif selon la revendication 5 pour la mise en oeuvre du procédé selon la revendication 4, caractérisé en ce que la source de lumière (20,21) produit une lumière polarisée, et que le dispositif de détection (26) est conçu pour mesurer la variation de la direction de polarisation de cette lumière sous l'effet du contact optique du guide d'ondes avec la substance à mesurer (10).

**11.** Dispositif selon la revendication 10, caractérisé en ce que la mesure s'effectue par compensation de la variation de la direction de polarisation.

Fig. 1

Fig. 2

## Fig. 3

## Fig. 5

Fig. 4

EP 0 340 577 B1